# EUROPEAN PATENT SPECIFICATION

(11) **EP 3 578 362 B1**
(45) Date of publication and mention of the grant of the patent: **04.08.2021**
(21) Application number: 18176628.8
(22) Date of filing: 07.06.2018
(51) Int. Cl.: B33Y 10/00, B29C 64/153, B29C 64/165

(54) **METHOD, CONTROLLER AND APPARATUS FOR ADDITIVELY MANUFACTURING AT LEAST ONE THREE-DIMENSIONAL OBJECT**
VERFAHREN, STEUERGERÄT UND VORRICHTUNG ZUR GENERATIVEN FERTIGUNG VON MINDESTENS EINEM DREIDIMENSIONALEN OBJEKT
PROCÉDÉ, CONTRÔLEUR ET DISPOSITIF DE FABRICATION ADDITIVE D'AU MOINS UN OBJET TRIDIMENSIONNEL

(43) Date of publication of application: 11.12.2019
(73) Proprietor: CL Schutzrechtsverwaltungs GmbH, 96215 Lichtenfels (DE)
(72) Inventor: Winiarski, Daniel, 96231 Bad Staffelstein (DE)
(74) Representative: Hafner & Kohl PartmbB

(56) References cited:
- DE-B3-102011 105 045

## Description

The invention relates to a method for additively manufacturing at least one three-dimensional object by means of successive layerwise selective irradiation and consolidation of build material layers by means of at least one energy beam.

Respective methods for additively manufacturing at least one three-dimensional object, which may be implemented as selective electron beam melting processes or selective laser melting processes, for instance, are generally known from the technical field of additive manufacturing.

Thereby, it is observed that additively manufactured objects by means of known additive manufacturing processes, e.g. selective laser melting processes, may comprise anisotropic structural properties, i.e. particularly anisotropic mechanical properties, which are typically explained by the nature of respective additive manufacturing processes, i.e. the successive layerwise selective irradiation and consolidation of build material layers.

Respective anisotropic structural and mechanical properties of the additively manufactured three-dimensional objects may result in mechanical properties which vary in different spatial directions. As an example, an additively manufactured component may have a different tensile strength, compressive strength and/or shear strength in different spatial directions.

Since it is generally desirable to additively manufacture three-dimensional objects having isotropic structural properties, i.e. particularly isotropic mechanical properties, there exists a need for further developing additive manufacturing processes so that the three-dimensional objects which can be manufactured have improved, i.e. particularly isotropic, structural properties.

DE 10 2011 105 045 B3 discloses a method for additively manufacturing at least one three-dimensional object, whereby a specific irradiation approach is applied. This publication discloses the features of the preamble of claim 1.

It is the object of the invention to provide a method for additively manufacturing at least one three-dimensional object allowing for additively manufacturing three-dimensional objects having improved, i.e. particularly isotropic, structural properties.

This object is achieved by a method for additively manufacturing at least one three-dimensional object according to Claim 1. The claims depending on Claim 1 relate to possible embodiments of the method according to Claim 1.

The method described herein is a method for additively manufacturing at least one three-dimensional object, e.g. a technical component, by means of successive layerwise selective irradiation and consolidation of build material layers by means of at least one energy beam. The build material may be a ceramic, polymer, or metal. The build material is typically, provided as a powder. The energy beam may be an electron or laser beam, for instance. The build material layers which are to be selectively irradiated and consolidated are successively applied in a build plane of an apparatus for additively manufacturing at least one three-dimensional object which is used for performing the method. The method is thus, performable or performed by an apparatus for additively manufacturing at least one three-dimensional object.

The method may be implemented as a selective laser sintering method, a selective laser melting method, or a selective electron beam melting method, for instance. Yet, it is also conceivable that the method is a binder jetting method, particularly a metal binder jetting method, for instance. The apparatus for performing the method may thus, be embodied as a selective laser sintering apparatus, a selective laser melting apparatus, or a selective electron beam melting apparatus, for instance. Yet, it is also conceivable that the apparatus is embodied as a binder jetting apparatus, particularly a metal binder jetting apparatus, for instance.

The method generally comprises the steps of:
- irradiating and thereby consolidating an irradiation area which is to be selectively irradiated and thereby consolidated by means of at least one energy beam (hereinafter "irradiation area") of a first build material layer, whereby at least one sub-area of the irradiation area which is at least partly disposed below at least one irradiation area of a second build material layer which is disposed directly above the first build material layer is excluded from being irradiated and thereby consolidated; and
- irradiating the irradiation area of the second build material layer in an area above the at least one sub-area of the irradiation area of the first build material layer in such a manner that the at least one sub-area of the irradiation area of the first build material layer is consolidated.

According to a first step of the method, an irradiation area which is to be selectively irradiated and thereby consolidated by means of at least one energy beam (hereinafter "irradiation area") of a first build material layer is irradiated and consolidated. Thereby at least one sub-area of the irradiation area which is at least partly disposed below at least one irradiation area of a second build material layer which is disposed directly above the first build material layer is excluded from being irradiated and thereby consolidated.

According to an exemplary embodiment of the method, for at least two build material layers which are vertically directly adjacently disposed - i.e. a first build material layer being directly disposed below a second build material layer in a vertical direction and the second build material layer being directly disposed above the first build material layer in the vertical direction, respectively - and which comprise at least one irradiation area, it is determined if at least one irradiation area of a first build material layer comprises at least one sub-area which is at least partly disposed below at least one irradiation area of a second build material layer. Thus, the method may comprise a determination step in which it is determined if at least one irradiation area of the first build material layer comprises at least one sub-area which is directly disposed below at least one irradiation area of the second build material layer.

This optional determination step may be based on data containing respective irradiation areas of respective build material layers which need to be selectively irradiated and thereby consolidated for additively manufacturing the three-dimensional object. For example, respective data can be or comprise build data and/or slice data of the three-dimensional object which is to be additively manufactured. A hard- and/or software embodied determination means being configured to determine if at least one irradiation area which is to be selectively irradiated and consolidated of a first build material layer comprises at least one sub-area which is at least partly disposed below at least one irradiation area which is to be selectively irradiated and thereby consolidated of a second build material layer which second build material layer is disposed directly above the first build material layer can be used to perform the determination step of the method.

The optional determination step may take place before selectively irradiating and thereby consolidating the irradiation area of the first build material layer.

According to a second or further step of the method, irradiation of the irradiation area of the first build material layer is performed, whereby the at least one sub-area of the irradiation area of the first build material layer which sub-area is disposed directly below the at least one irradiation area of the second build material layer is excluded from being irradiated and thereby consolidated. Hence, the sub-area of the irradiation area of the first build material layer is either completely excluded from being irradiated such that the sub-area is not irradiated at all, or the sub-area of the irradiation area of the first build material layer is not completely excluded from being irradiated such that the sub-area is irradiated, yet (at least with respect to the remaining portions of the irradiation area of the first build material layer which are to be irradiated and thereby consolidated) not consolidated, e.g. because irradiating the sub-area only results in pre-tempering, i.e. particularly pre-tempering, but not in (full) melting. In other words, irradiating of the irradiation area of the first build material layer is performed in such a manner that not the entire irradiation area of the first build material layer is consolidated, but the sub-area which sub-area is disposed directly below the at least one irradiation area of the second build material layer is not consolidated. Hence, in this step the amount of energy input into the sub-area is not high enough that a (desired) consolidation of the sub-area takes place. Thus, after irradiating the irradiation area of the first build material layer, the irradiation area of the first build material layer comprises consolidated portions, the consolidated portions comprising the portions of the irradiation area excluding the sub-area being disposed directly below the at least one irradiation area of the second build material layer, and non-consolidated portions comprising the sub-area being disposed directly below the at least one irradiation area of the second build material layer. An irradiation device being configured to selectively irradiate a respective irradiation area of a build material layer with at least one energy beam, particularly an electron or laser beam, is used to perform the second step of the method.

The second step of the method may particularly, be implemented if it is determined that the irradiation area of the first build material layer comprises at least one sub-area which is directly disposed below at least one irradiation area of the second build material layer - the same applies if it is determined that at least one irradiation area of the second build material layer is directly disposed above at least one sub-area of the irradiation area of the first build material layer.

According to a third or further step of the method, the irradiation area of the second build material layer is irradiated at least in a portion disposed above the sub-area of the irradiation area of the first build material layer, whereby the sub-area of the irradiation area of the first build material layer is irradiated and thereby consolidated. In other words, the irradiation area of the second build material layer is irradiated at least in a portion above the sub-area of the irradiation area of the first build material layer in such a manner that the sub-area of the irradiation area of the first build material layer is irradiated and thereby consolidated. Hence, in this step the amount of energy input into the sub-area of the irradiation area of the first build material layer is high enough that a (desired) consolidation of the sub-area takes place. Thus, the sub-area of the irradiation area of the first build material layer is not irradiated and thereby consolidated when selectively irradiating the first build material layer, but when selectively irradiating the second build material layer. Of course, irradiating the irradiation area of the second build material layer may also comprise irradiation and consolidating the portions of the irradiation area of the second build material layer which are not disposed above the sub-area of the irradiation area of the first build material layer. Hence, after selectively irradiating the second build material layer, the irradiation area of the second build material layer may be completely consolidated.

According to an exemplary embodiment of the method, which particularly applies when an irradiation area comprises a plurality of respective sub-areas, at least one specific sub-area which is disposed below an irradiation area of a respective second build material layer, i.e. an upper build material layer, may be selected (from a plurality of respective sub-areas of a respective irradiation area of a respective first build material layer, i.e. a lower build material layer, which are at least partly disposed below an irradiation area of the respective second build material layer, i.e. the upper build material layer, particularly ,if it is determined that the irradiation area of the respective first build material layer, i.e. the lower build material layer, comprises at least one sub-area, particularly a plurality of sub-areas, which is/are at least partly disposed below an irradiation area of the respective second build material layer, i.e. the upper build material layer. In this case, the irradiation area of the respective first build material layer, i.e. the lower build material layer, is irradiated and thereby consolidated, whereby the at least one selected sub-area is excluded from being irradiated and thereby consolidated. A suitable, particularly pre-defined or pre-definable, particularly user-definable, selecting rule, e.g. implemented in a selecting algorithm, may be used for selecting a respective specific sub-area. The selecting rule may refer to pre-defined or pre-definable, particularly user-definable, structural properties, particularly mechanical properties, of the three-dimensional which is to be additively manufactured in accordance with the method described herein.

A portion of the irradiation area of the second build material layer which is disposed above a respective sub-area of the first build material layer, particularly above the or at least one selected sub-area of the first build material layer, may be deemed or denoted as a special area of the irradiation area of the second build material layer.

The or at least one respective special area of the irradiation area of the second build material layer which is disposed above the sub-area of the first build material layer, particularly above the or at least one selected sub-area of the first build material layer, may be irradiated with a different irradiation parameter set compared with a reference irradiation parameter set applied for irradiation the remaining portions of the irradiation area of the second build material layer. The different irradiation parameter set may result in a higher energy input into the respective special area of the irradiation area of the second build material layer. The higher energy input into the special area of the irradiation area of the second build material layer results in that the special area of the irradiation area of the second build material layer is consolidated with the at least one (selected) sub-area of the irradiation area of the first build material layer. This will allow for generating a vertically extending consolidating region which at least comprises portions of the special area of the irradiation area of the second build material layer as well as the at least one (selected) sub-area of the irradiation area of the first build material layer and/or for generating vertically extending structural elements which at least comprises the special area of the irradiation area of the second build material layer and the at least one (selected) sub-area of the irradiation area of the first build material layer.

Adjusting or changing the irradiation parameter set used for irradiating the second build material layer, i.e. particularly the special area of the irradiation area of the second build material layer, may be performed while irradiating the irradiation area of the second build material layer (on the fly change) or by initially excluding the special area of the irradiation area of the second build material layer so that only the remaining portions of the irradiation area of the second build material layer are irradiated on basis of the reference irradiation parameter set and then separately irradiating the special area of the irradiation area of the second build material layer above the at least one (selected) sub-area of the irradiation area of the first build material layer on basis of the different irradiation parameter set.

Thus, by irradiating the irradiation area of the second build material layer at least in a portion above the sub-area of the irradiation area of the first build material layer, in such a manner that the sub-area of the irradiation area of the first build material layer is irradiated and thereby consolidated, structural elements vertically extending across at least two build material layers are built or generated which allow for concertedly adjusting the structural properties, i.e. particularly the mechanical properties, of the three-dimensional object which is to be additively manufactured. Respective structural elements particularly, result in decreased anisotropic structural properties of the three-dimensional object which is to be additively manufactured, but in increased isotropic properties of the three-dimensional object which is to be additively manufactured. According to the invention, a plurality of respective structural elements are built or generated which are uniformly or non-uniformly distributed throughout the three-dimensional object. Likewise, the or an irradiation device being configured to selectively irradiate a respective irradiation area of a build material layer with at least one energy beam, particularly an electron or laser beam, is used to perform the third step of the method.

Of course, the above-described principle may also be extended to more than two build material layers being directly disposed above each other. Thus, the method may comprise the steps of:
- irradiating and thereby consolidating an irradiation area of a second build material layer, whereby at least one sub-area of the irradiation area which is at least partly disposed below at least one irradiation area of a third or further build material layer which is disposed directly above the second build material layer is excluded from being irradiated and thereby consolidated; and
- irradiating the irradiation area of the third or further build material layer in an area above the at least one sub-area of the irradiation area of the second build material layer in such a manner that the at least one sub-area of the irradiation area of the second build material layer is consolidated. All above annotations apply in analogous manner.

As such, it may be optionally determined if at least one irradiation area which is to be selectively irradiated and thereby consolidated of the second build material layer comprises at least one sub-area which is at least partly disposed below at least one irradiation area which is to be selectively irradiated and thereby consolidated of a third or further build material layer which is disposed directly above the second build material layer. If it is determined that the second build material layer comprises at least one irradiation area which is at least partly disposed below an irradiation area of the third or further build material layer, the irradiation area of the second build material layer is irradiated, whereby the at least one sub-area is excluded from being irradiated. Then, the irradiation area of the third or further build material layer is irradiated in a portion above the at least one sub-area of the irradiation area of the second build material layer, whereby the at least one sub-area of the irradiation area of the second build material layer is consolidated. All above annotations apply in analogous manner.

As indicated above, by irradiating the irradiation area of a respective second build material layer at least in a portion above the sub-area of the irradiation area of a first build material layer, in such a manner that the sub-area of the irradiation area of the first build material layer is irradiated and thereby consolidated, vertically extending structural elements vertically extending across more than one build material layer, i.e. particularly across two or more build material layers, are built or generated which allow for concertedly adjusting the structural properties, i.e. particularly the mechanical properties, of the three-dimensional object which is to be additively manufactured. Hence, by irradiating the irradiation area of the second build material layer, a vertically extending consolidating region which vertically extends across at least two build material layers, i.e. particularly a vertically extending melt pool which vertically extends across at least two build material layers, is generated which at least comprises portions of the irradiation area of a respective second build material layer as well as the at least one sub-area of a respective first build material layer. In other words, when irradiating respective portions of the irradiation area of a respective second build material layer which portions are disposed above a respective sub-area of a respective first build material layer, a consolidating region, i.e. particularly a melt pool, is built or generated which extends in vertical direction so as to encompass both the first and second build material layer. A respective consolidated region thus, typically extends across the thickness of more than one build material layer, particularly at least across the thickness of one and a half build material layers, preferably across the thickness of two or more build material layers.

After being consolidated, i.e. typically cooled below a build material specific consolidation temperature, i.e. typically the melt temperature of the build material, a respective consolidated region may build at least one vertically extending structural element. As a consequence, a respective vertically extending structural element thus, typically extends across the thickness of more than one build material layer, particularly at least across the thickness of one and a half build material layers, preferably across the thickness of two or more build material layers. In other words, a respective vertically extending structural element may comprise a vertical extension of the sum of the layer thickness of more than one build material layer, particularly at least one and a half build material layers, preferably at least two or more build material layers.

A respective vertically extending structural element may be built or generated with a two-dimensional or three-dimensional shape and/or a two-dimensional or three-dimensional extension through the three-dimensional object which is to be additively manufactured. Straight or curved shapes and/or straight or curved extensions are possible. Generally, any geometrically defined or undefined shape and/or extension is conceivable.

A respective vertically extending structural element may particularly have a bar-, rod-, pillar-, plate-, or ridge-like shape. Hence, by irradiating the irradiation area of the second build material layer, a particularly bar-, rod-, pillar-, plate-, or ridge-like shaped vertically extending structural element which at least comprises selectively irradiated and thereby consolidated portions of the irradiation area of the respective second build material layer and the sub-area of the first build material layer may be built or generated.

As is clear from the above, a respective vertically extending structural element typically extends at least in build direction of the three-dimensional object which is to be additively manufactured. Yet, an (additional) extension in at least one further (spatial) direction, e.g. a transverse direction with respect to the build direction, is possible.

According to the invention, a plurality of respective vertically extending structural elements are provided in uniform or non-uniform two- or three-dimensional distribution across the three-dimensional object which is to be additively manufactured or the cross-section of the three-dimensional object which is to be manufactured, respectively. Respective vertically extending structural elements may be provided in in uniform or non-uniform distribution in at least one common horizontal plane and/or in different horizontal planes of the three-dimensional object which is to be manufactured.

By introducing respective vertically extending structural elements in the three-dimensional object, a three-dimensional object which is additively manufactured comprises improved structural properties, particularly isotropic properties, since the three-dimensional object is not only built of vertically stacked consolidated horizontal build material layers, but also comprises respective vertically extending structural elements extending in a vertical direction. Hence, a method for additively manufacturing at least one three-dimensional object allowing for additively manufacturing three-dimensional objects having improved, i.e. particularly isotropic, structural properties, is given.

It is possible that at least one special irradiation parameter set may be used for generating respective vertically extending structural elements. In other words, for generating respective vertically extending structural elements a different irradiation parameter set compared with a reference irradiation parameter set used for irradiating the remaining portions, i.e. with respect to a respective first build material layer the portions of the irradiation area which not comprise a respective (selected) sub-area and with respect to a respective second build material layer the portions which are not disposed above a respective (selected) sub-area of the irradiation area of the first build material layer, may be used. The irradiation parameter set used for generating respective vertically extending structural elements comprises irradiation parameters allowing for the abovementioned high amount of energy input into the sub-area of the irradiation area of the first build material layer and thus, allowing for that a (desired) consolidation of the sub-area of the irradiation area of the first build material layer takes place. Hence, the irradiation parameter set used for generating respective vertically extending structural elements typically results in a higher (vertical) energy input into the build material layers compared with the reference irradiation parameter set. The irradiation parameter set used for generating respective vertically extending structural elements may e.g. comprise a different, i.e. typically a higher, beam power, (higher) beam intensity, different (vertical) focal position, different focal spot size, etc. compared with the reference irradiation parameter set.

The irradiation parameter set used for generating respective generating respective vertically extending structural elements may be selected in such a manner that respective vertically extending structural elements have different structural properties, particularly mechanical properties, compared with other consolidated areas of the remaining portions, i.e. with respect to a respective first build material layer the portions of the irradiation area which not comprise a respective (selected) sub-area and with respect to a respective second build material layer the portions which are not disposed above a respective (selected) sub-area of the irradiation area of the first build material layer. In such a manner, the three-dimensional object which is to be additively manufactured in accordance with the method described herein, may be provided with composite-material-like structural properties, whereby respective vertically extending structural elements may represent strengthening structures extending in a base material structure represented by the remaining portions of respective irradiation areas of build material layers.

As mentioned above, the above-described principle may be extended to more than two build material layers being directly disposed above each other. The respective annotations above apply in analogous manner. In this case, at least one sub-area of the irradiation area of a first build material layer may be horizontally offset to at least one sub-area of the irradiation area of the second build material layer. Hence, a staggered arrangement of respective vertically extending consolidated areas and vertically extending structural elements, respectively is possible. A first vertically extending structural element may vertically extend between a first build material layer and at least one second build material layer, a second vertically extending structural element may vertically extend between the second build material layer and at least one third build material layer, a further vertically extending structural element may vertically extend between the third build material layer and at least one further build material layer and so on.

Respective vertically extending structural elements may be adjacently disposed so as to generate a staircase-like arrangement in which respective adjacently disposed vertically extending structural elements represent the steps of the stair-case like arrangements. By concertedly introducing respective stair-case like arrangements of same or different spatial orientation in a three-dimensional object which is to be manufactured in accordance with the method described herein, a measure for concertedly controlling the isotropic properties of the three-dimensional object is given.

As mentioned above, a plurality of respective vertically extending structural elements may be provided in uniform or non-uniform distribution across the cross-section of the three-dimensional object which is to be manufactured in accordance with the method described herein. In particular, respective vertically extending structural elements may be provided with a horizontal and/or vertical offset relative to each other. A respective horizontal and/or vertical offset may comprise a horizontally and/or vertically stacked arrangement of respective vertically extending structural elements, for instance.

In same manner, a plurality of respective staircase-like arrangements may be provided in uniform or non-uniform distribution across the three-dimensional object which is to be manufactured or the cross-section of the three-dimensional object which is to be manufactured, respectively. Respective staircase-like arrangements may be oriented in same or different spatial directions; i.e. a first staircase-like arrangement may be oriented in a first spatial direction, e.g. in an x-direction of the three-dimensional object, and a second staircase-like arrangement may be oriented in a second spatial direction, e.g. in a y-direction of the three-dimensional object. By concertedly arranging and orienting respective stair-case like arrangements same or same or different vertical extensions and/or of same or different spatial orientation in the three-dimensional object which is to be, a measure for concertedly controlling the isotropic properties of the three-dimensional object is given.

The arrangement and orientation of respective vertically extending structural elements and respective stair-case like arrangements, respective may also be used to generate breaking point structures in the three-dimensional object which is to be manufactured. Respective generate breaking point structures may be generated between consolidated build material layers in between which no respective vertically extending structural element extends, i.e. in between build material layers which are not vertically connected by at least one vertically extending structural element.

The invention further relates to a hard- and/or software embodied control unit for an apparatus for additively manufacturing at least one three-dimensional object by means of successive layerwise selective irradiation and consolidation of build material layers by means of at least one energy beam. The control unit is configured to:
- control irradiating and thereby consolidating an irradiation area which is to be selectively irradiated and thereby consolidated of a first build material layer, whereby at least one sub-area of the irradiation area which is at least partly disposed below at least one irradiation area which is to be selectively irradiated and thereby consolidated of a second build material layer which is disposed directly above the first build material layer is excluded from being irradiated and thereby consolidated; and
- control irradiating the irradiation area of the second build material layer in an area above the at least one sub-area of the irradiation area of the first build material layer in such a manner that the at least one sub-area of the irradiation area of the first build material layer is consolidated.

The control unit may be particularly, configured to determine if at least one irradiation area which is to be selectively irradiated and thereby consolidated of a first build material layer comprises at least one sub-area which is at least partly disposed below at least one irradiation area which is to be selectively irradiated and thereby consolidated of a second build material layer which is disposed directly above the first build material layer. The control unit may be further configured to control irradiating the irradiation area of the first build material layer, whereby the at least one sub-area is excluded from being irradiated and thereby consolidated, if it is determined that the irradiation area of the first build material layer comprises at least one sub-area which is at least partly disposed below an irradiation area of the second build material layer. The control unit may be further configured to control irradiating the irradiation area of the second build material layer in an area above the at least one sub-area of the first build material layer in such a manner the at least one sub-area of the irradiation area of the first build material layer is consolidated.

The invention further relates to an apparatus for additively manufacturing at least one three-dimensional object by means of successive layerwise selective irradiation and consolidation of build material layers by means of at least one energy beam. The apparatus comprises or is connected with at least one control unit as specified herein.

The apparatus can be a selective laser sintering apparatus, a selective laser melting apparatus, or a selective electron beam melting apparatus, for instance. Yet, it is also conceivable that the apparatus is a binder jetting apparatus, particularly a metal binder jetting apparatus, for instance.

The apparatus comprises a number of functional and/or structural units which are operable or operated during its operation. Each functional and/or structural unit may comprise a number of functional and/or structural sub-units. Exemplary functional and/or structural units are a build material application unit which is configured to apply an amount of build material which is to be selectively irradiated and consolidated in the build plane of the apparatus so as to form a build material layer in the build plane, an irradiation unit which is configured to selectively irradiate and thereby, consolidate build material layers with at least one energy beam, and a respective control unit.

All annotations regarding the method also apply to the control unit and/or to the apparatus.

Exemplary embodiments of the invention are described with reference to the Fig., whereby:
- Fig. 1: shows a principle drawing of an apparatus for additively manufacturing of three-dimensional objects according to an exemplary embodiment;
- Fig. 2 - 4: each shows a principle drawing of a specific stage of a method according to an exemplary embodiment, and
- Fig. 5 - 12: each shows a principle drawing of a section of a three-dimensional object additively manufactured in accordance with a method according to an exemplary embodiment.

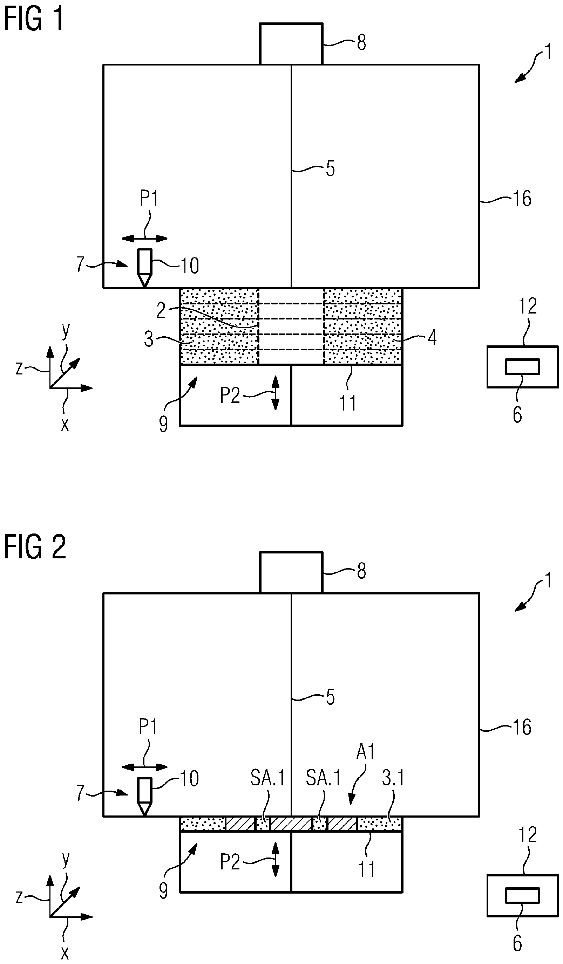

Fig. 1 shows a principle drawing of an exemplary embodiment of an apparatus 1 for additively manufacturing three-dimensional objects 2, e.g. technical components, by means of successive layerwise selective irradiation and accompanying consolidation of build material layers 3 of a powdered build material 4, e.g. a metal powder, which can be consolidated by means of at least one energy beam 5 according to an exemplary embodiment. The energy beam 5 may be an electron beam or a laser beam, for instance. The apparatus 1 may thus, be embodied as a selective electron beam melting apparatus or as a selective laser melting apparatus, for instance.

The apparatus 1 comprises a number of functional and/or structural units which are operable and operated during its operation. Each functional and/or structural unit may comprise a number of functional and/or structural sub-units. Operation of the functional and/or structural units and the apparatus 1, respectively is controlled by a hard- and/or software embodied (central) control unit 6.

Exemplary functional and/or structural units of the apparatus 1 are a build material application unit 7, an irradiation unit 8, and a carrying unit 9.

The build material application unit 7 is configured to apply an amount of build material 4 in the build plane of the apparatus 1 so as to generate respective build material layers 3 which are to be selectively irradiated and consolidated during additively manufacturing a three-dimensional object 2. The build material application unit 7 may comprise a build material application element 10 which may be embodied as a blade-like re-coating element, for instance. The build material application element 10 is moveably supported within the process chamber 11of the apparatus 1; the build material application element 10 may at least be moved across the build plane so as to apply an amount of dosed build material 4 in the build plane and so as to generate a respective build material layer 3 which is to be selectively irradiated and consolidated during additively manufacturing a three-dimensional object 2. The direction of application of build material 4 in the build plane BP corresponds to the x-direction. An exemplary motion of the build material application element 10 across the build plane BP is indicated by double-arrow P1. A drive unit (not shown) may be assigned to the build material application unit 7 so as to generate a drive force for moving the build material application element 10.

The irradiation unit 8 is configured to selectively irradiate and thereby, consolidate respective build material layers 3 which have been applied in the build plane of the apparatus 1 by means of the build material application unit 7 with at least one energy beam 5. The irradiation unit 8 may comprise a beam generating unit (not shown) configured to generate the at least one energy beam 5 and a beam deflecting unit (not shown), e.g. a scanning unit, configured to deflect the at least one energy beam 5 to diverse positions within the build plane.

The carrying unit 9 is configured to carry the build material layers 3 and the three-dimensional object 2 which is to be additively manufactured. The carrying unit 9 comprises a carrying element 11 (carrying table) which is moveably supported in a vertical direction (z-direction). An exemplary motion of the carrying element 11 is indicated by double-arrow P2. A drive unit (not shown) may be assigned to the carrying unit 9 so as to generate a drive force for moving the carrying element 11 to diverse positions in the vertical direction.

The control unit 6 is configured to implement a method for additively manufacturing a three-dimensional object 2 by means of controlling operation of the respective functional and/or structural units of the apparatus 1. Operation of respective functional and/or structural units of the apparatus 1 typically comprises controlling operation of the build material application unit 7, the irradiation unit 8, and the carrying unit 9.

The characteristic stages of the method will be explained in the following with reference on Fig. 2 - 4 each showing a principle drawing of a specific stage of a method according to an exemplary embodiment.

According to a first step of the method, an irradiation area A.1 which is to be selectively irradiated and thereby consolidated by the energy beam 5 of a first build material layer 3.1 is irradiated and consolidated. Thereby, at least one sub-area SA.1 of the irradiation area A.1 which is at least partly disposed below at least one irradiation area A.2 of a second build material layer 3.2 which is disposed directly above the first build material layer 3.1 is excluded from being irradiated and thereby consolidated.

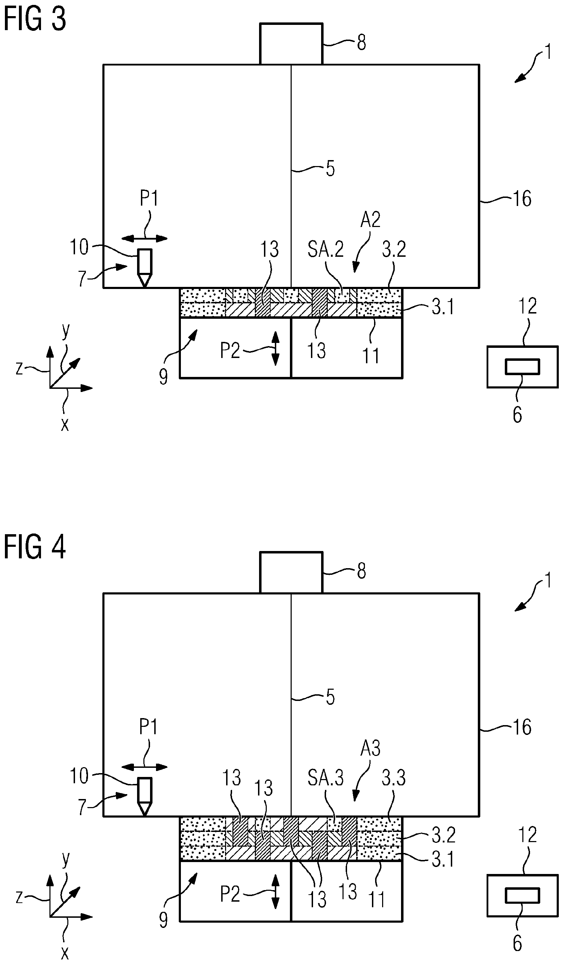

Optionally, for at least two build material layers 3.1, 3.2 which are vertically directly adjacently disposed - i.e. a first build material layer 3.1 being directly disposed below a second build material layer 3.2 in a vertical direction (z-direction) and the second build material layer 3.2 being directly disposed above the first build material layer 3.1 in the vertical direction, respectively - and which comprise an irradiation area A.1, A.2 which is to be selectively irradiated and thereby consolidated by means of the energy beam 5, it may be determined if the irradiation area A.1 of a first build material layer 3.1 comprises a sub-area SA.1 which is disposed below the irradiation area A.2 of a second build material layer 3.2. Thus, the method may comprise a determination step in which it is determined if an irradiation area A.1 of the first build material layer 3.1 comprises a sub-area SA.1 which is directly disposed below at least one irradiation area A.2 of the second build material layer 3.2 (see Fig. 2, 3).

This optional determination may be based on data containing respective irradiation areas A.1 - A.n of respective build material layers 3.1 - 3.n which need to be selectively irradiated and thereby consolidated for additively manufacturing the three-dimensional object 2. Respective data can be or comprise build data and/or slice data of the three-dimensional object 2 which is to be additively manufactured. A hard- and/or software embodied determination means 12 (optional) being configured to determine if at least one irradiation area A.1 - A.n of a first build material layer 3.1 comprises at least one sub-area A.1 which is at least partly disposed below at least one irradiation area A.2 of a second build material layer 3.2 which second build material layer 3.2 is disposed directly above the first build material layer 3.1 can be used to perform the optional determination step of the method. The determination means may form part of the control unit 6.

The optional determination step may take place before selectively irradiating and thereby consolidating the irradiation area A.1 of the first build material layer 3.1.

Even though Fig. 2 - 4 show that the first build material layer 3.1 is in fact the first build material layer 3 which is to be selectively irradiated and consolidated for additively manufacturing the three-dimensional object 2, the first build material layer 3.1 may be any layer in the stack of build material layers 3 which will be selectively irradiated and consolidated for additively manufacturing the three-dimensional object 2.

According to a second step of the method, irradiation of the irradiation area A.1 of the first build material layer 3.1 is performed, whereby the sub-area SA.1 of the irradiation area A.1 of the first build material layer 3.1 which sub-area is disposed directly below the irradiation area A.2 of the second build material layer 3.2 is excluded from being irradiated and thereby consolidated.

The second step of the method may be particularly performed if it is determined that the irradiation area A.1 of the first build material layer 3.1 comprises a sub-area SA.1 which is directly disposed below the irradiation area A.2 of the second build material layer 3.2 - the same applies if it is determined that the irradiation area A.2 of the second build material layer 3.2 is directly disposed above a sub-area SA.1 of the irradiation area A.1 of the first build material layer 3.1.

Fig. 2 shows the first build material layer 3.1 after being selectively irradiated, whereby the consolidated portions are depicted with a first hatching.

Hence, the sub-area SA.1 of the irradiation area A.1 of the first build material layer 3.1 is either completely excluded from being irradiated such that the sub-area SA.1 is not irradiated at all, or the sub-area SA.1 of the irradiation area A.1 of the first build material layer 3.1 is not completely excluded from being irradiated such that the sub-area SA.1 is irradiated, yet (at least with respect to the remaining portions of the irradiation area A.1 of the first build material layer 3.1 which are to be irradiated and thereby consolidated) not consolidated, e.g. because irradiating the sub-area SA.1 only results in pre-tempering, i.e. particularly pre-tempering, but not in (full) melting. In other words, irradiating of the irradiation area A.1 of the first build material layer 3.1 is performed in such a manner that not the entire irradiation area A.1 of the first build material layer 3.1 is consolidated, but the sub-area SA.1 which sub-area SA.1 is disposed directly below the irradiation area A.2 of the second build material layer 3.2 is not consolidated. Hence, in this step the amount of energy input into the sub-area SA.1 is not high enough that a (desired) consolidation of the sub-area SA.1 takes place. Thus, after irradiating the irradiation area A.1 of the first build material layer 3.1, the irradiation area A.1 of the first build material layer 3.1 comprises consolidated portions, the consolidated portions comprising the portions of the irradiation area A.1 excluding the sub-area SA.1 being disposed directly below the irradiation area A.2 of the second build material layer 3.2, and non-consolidated portions comprising the sub-area SA.1 being disposed directly below the irradiation area A.2 of the second build material layer 3.2 (see Fig. 2).

According to a third or further step of the method, the irradiation area A.2 of the second build material layer 3.2 is irradiated at least in a portion disposed above the sub-area SA.1 of the irradiation area A.1 of the first build material layer 3.1, whereby the sub-area SA.1 of the irradiation area A.1 of the first build material layer 3.1 is irradiated and thereby consolidated. In other words, the irradiation area A.2 of the second build material layer 3.2 is irradiated at least in a portion above the sub-area SA.1 of the irradiation area A.1 of the first build material layer 3.1 in such a manner that the sub-area SA.1 of the irradiation area A.1 of the first build material layer 3.1 is irradiated and thereby consolidated. Hence, in this step the amount of energy input into the sub-area SA.1 of the irradiation area A.1 of the first build material layer 3.1 is high enough that a (desired) consolidation of the sub-area SA.1 takes place. Thus, the sub-area SA.1 of the irradiation area A.1 of the first build material layer 3.1 is not irradiated and thereby consolidated when selectively irradiating the first build material layer 3.1, but when selectively irradiating the second build material layer 3.2. Of course, irradiating the irradiation area A.2 of the second build material layer may also comprise irradiation and consolidating the portions of the irradiation area of the second build material layer 3.2 which are not disposed above the sub-area SA.1 of the irradiation area A.1 of the first build material layer 3.1. Hence, after selectively irradiating the second build material layer 3.2, the irradiation area A.2 of the second build material layer 3.2 may be completely consolidated.

Fig. 3 shows the second build material layer 3.2 after being selectively irradiated, whereby the consolidated portions are depicted with a second hatching. As is apparent from Fig. 3, the irradiation area A.2 of the second build material layer 3.2 may also comprise at least one respective sub-area SA.2.

As is apparent from Fig. 4, the principle may also be extended to more than two build material layers 3.1 - 3.n being directly disposed above each other. As such, it may be optionally determined if at least one irradiation area A.2 of the second build material layer 3.2 comprises at least one sub-area SA.2 which is disposed below an irradiation area A.3 of a third or further build material layer 3.3 which is disposed directly above the second build material layer 3.2. If it is determined that the second build material layer 3.2 comprises an irradiation area A.2 which is disposed below an irradiation area A.3 of the third or further build material layer 3.3, the irradiation area A.2 of the second build material layer 3.2. is irradiated, whereby at least one sub-area SA.2 is excluded from being irradiated. Then, the irradiation area A.3 of the third or further build material layer 3.3 is irradiated in a portion above the at least one sub-area SA.2 of the irradiation area A.2 of the second build material layer 3.2, whereby the at least one sub-area SA.2 of the irradiation area A.2 of the second build material layer 3.2 is consolidated.

Fig. 4 shows the first build material layer 3.3 after being selectively irradiated, whereby the consolidated portions are depicted with a third hatching. As is apparent from Fig. 4, the irradiation area A.3 of the third build material layer 3.3 may also comprise at least one respective sub-area SA.3.

At least one respective specific sub-area SA.1 - SA.3 which is disposed below an irradiation area A.1 - A.3 of an upper build material layer may be selected (from a plurality of respective sub-areas SA.1 - SA.3 of a respective irradiation area of a lower build material layer which are at least partly disposed below an irradiation area of the upper build material layer), e.g. if it is determined that the irradiation area A of the lower build material layer 3 comprises at least one sub-area SA, particularly a plurality of sub-areas, which is/are at least partly disposed below an irradiation area of the upper build material layer. In this case, the irradiation area A of the lower build material layer 3 is irradiated and thereby consolidated, whereby the at least one selected sub-area SA is excluded from being irradiated and thereby consolidated. A suitable, particularly pre-defined or pre-definable, particularly user-definable, selecting rule, e.g. implemented in a selecting algorithm, may be used for selecting the respective sub-area. The selecting rule may refer to the pre-defined or pre-definable, particularly user-definable, structural properties of the three-dimensional which is to be additively manufactured.

A portion of the irradiation area A.2 of the second build material layer 3.2 which is disposed above a respective sub-area SA.1 of the first build material layer 3.1, particularly above the or at least one selected sub-area SA.1 of the first build material layer 3.1, may be deemed or denoted as a special area of the irradiation area A.2 of the second build material layer 3.2.

In this case, the or at least one respective special area of the irradiation area A.2 of the second build material layer 3.2 which is disposed above the sub-area SA.1 of the first build material layer 3.1, particularly above the or at least one selected sub-area SA.1 of the first build material layer 3.1, may be irradiated with a different irradiation parameter set compared with a reference irradiation parameter set applied for irradiation the remaining portions of the irradiation area A.2 of the second build material layer 3.2. The different irradiation parameter set may result in a higher energy input into the respective special area of the irradiation area A.2 of the second build material layer 3.2. The higher energy input into the special area of the irradiation area A.2 of the second build material layer 3.2 results in that the special area of the irradiation area A.2 of the second build material layer 3.2 is consolidated with the at least one (selected) sub-area SA.1 of the irradiation area A.1 of the first build material layer 3.1. This will typically allow for generating a vertically extending consolidating region which at least comprises portions of the special area of the irradiation area A.2 of the second build material layer 3.2 as well as the at least one (selected) sub-area SA.1 of the irradiation area A.1 of the first build material layer 3.1 and/or for generating vertically extending structural elements 13 which at least comprises the special area of the irradiation area A.2 of the second build material layer 3.2 and the at least one (selected) sub-area SA.1 of the irradiation area A.1 of the first build material layer 3.1.

Adjusting or changing the irradiation parameter set used for irradiating the second build material layer 3.2, i.e. particularly the special area of the irradiation area A.2 of the second build material layer 3.2, may be performed while irradiating the irradiation area A.2 of the second build material layer 3.2 (on the fly change) or by initially excluding the special area of the irradiation area A.2 of the second build material layer 3.2 so that only the remaining portions of the irradiation area A.2 of the second build material layer 3.2 are irradiated on basis of the reference irradiation parameter set and then separately irradiating the special area of the irradiation area A.2 of the second build material layer 3.2 above the at least one (selected) sub-area SA.1 of the irradiation area A.1 of the first build material layer 3.1 on basis of the different irradiation parameter set.

Thus, by irradiating the irradiation area A.2, A.3 of the second build material layer 3.2 or the third build material layer 3.3, respectively at least in a portion above the sub-area SA.1, SA.2 of the irradiation area A.1 of the first build material layer 3.1 or the second build material layer 3.2, respectively, in such a manner that the sub-area SA.1, SA.2 of the irradiation area of the first build material layer 3.1 or the second build material layer 3.2, respectively is irradiated and thereby consolidated, bar- rod-, pillar-, plate-, or ridge-like shaped vertically extending structural elements 13 vertically extending across at least two build material layers 3.1 - 3.3 are built or generated which allow for concertedly adjusting the structural properties, i.e. particularly the mechanical properties, of the three-dimensional object 2 which is to be additively manufactured. Respective structural elements 31 particularly, result in decreased anisotropic structural properties of the three-dimensional object 2 which is to be additively manufactured, but in increased isotropic properties of the three-dimensional object 2 which is to be additively manufactured. As is apparent from Fig. 2 - 5, a plurality of respective structural elements 13 may be built or generated.

Hence, by irradiating the irradiation area A.2, A.3 of the second build material layer 3.2 or the third build material layer 3.3, respectively, a vertically extending consolidating region which vertically extends across at least two build material layers 3.1 - 3.3, i.e. particularly a vertically extending melt pool which vertically extends across at least two build material layers 3.1 - 3.3, is generated which at least comprises portions of the irradiation area A.1 - A.2 of a respective upper build material layer 3.2, 3.3 as well as the at least one sub-area SA.1, SA.2 of a respective lower build material layer 3.1, 3.2. In other words, when irradiating respective portions of the irradiation area A.1, A.2 of a respective upper build material layer 3.2, 3.3 which portions are disposed above a respective sub-area SA.1, SA.2 of a respective lower build material layer 3.1, 3.2, a consolidating region, i.e. particularly a melt pool, is built or generated which extends in vertical direction so as to encompass both the upper and lower build material layer 3.1 - 3.3. A respective consolidated region thus, typically extends across the thickness of more than one build material layer 3.1 - 3.3, particularly at least across the thickness of one and a half build material layers 3.1 - 3.3, preferably across the thickness of two or more build material layers 3.1 - 3.3.

After being consolidated, i.e. typically cooled below a build material specific consolidation temperature, i.e. typically the melt temperature of the build material 4, a respective consolidated region may build or generate at least one vertically extending structural element 13. As a consequence, a respective vertically extending structural element 13 thus, extends across the thickness of more than one build material layer 3.1 - 3.3, particularly at least across the thickness of one and a half build material layers 3.1 - 3.3, preferably across the thickness of two or more build material layers 3.1 - 3.3. As is apparent from the Fig., a respective vertically extending structural element 13 may comprise a vertical extension of the sum of the layer thickness of more than one build material layer 3.1 - 3.3, particularly at least one and a half build material layers 3.1 - 3.3, preferably two or more build material layers 3.1 - 3.3.

As is clear from the above and apparent from the Fig., a respective vertically extending structural element 13 extends in build direction.

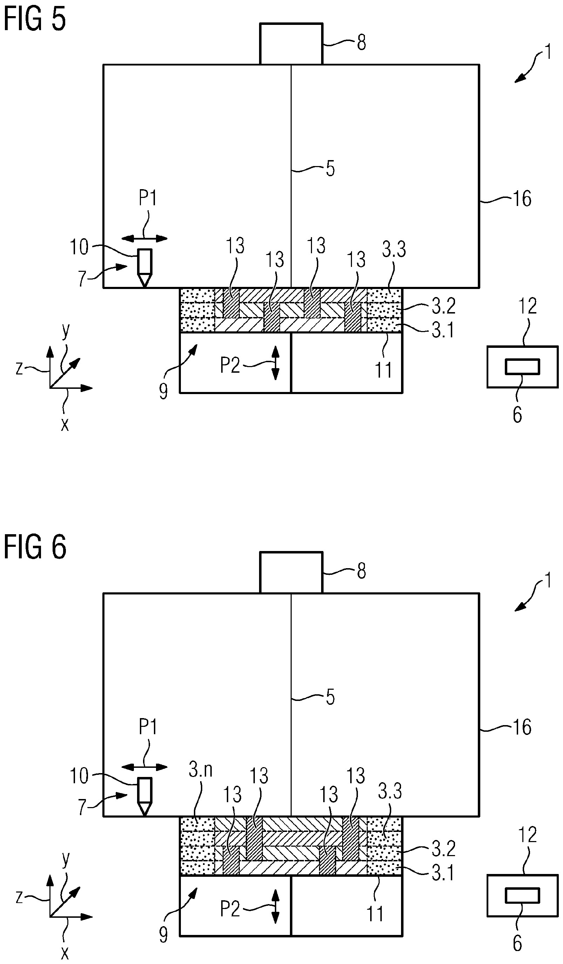

Fig. 5 - 12, each showing a principle drawing of an exemplary section of a three-dimensional object 2 additively manufactured in accordance with a method according to an exemplary embodiment, particularly show that a plurality of respective vertically extending structural elements 13 are provided in uniform or non-uniform distribution across the cross-section of the three-dimensional object 2 which is to be manufactured. As is apparent from these Fig., respective vertically extending structural elements 13 may be provided in in uniform or non-uniform distribution in at least one common horizontal plane and/or in different horizontal planes of the three-dimensional object 2 which is to be manufactured.

By introducing respective vertically extending structural elements 13 in the three-dimensional object 2, a three-dimensional object 2 which is additively manufactured, comprises improved structural properties, particularly isotropic properties, since the object 2 is not only built of vertically stacked consolidated horizontal build material layers 3, but also comprises respective structural elements 13 extending in a vertical direction.

It is possible that a special irradiation parameter set may be used for generating respective vertically extending structural elements 13. In other words, for generating respective vertically extending structural elements 13 a different irradiation parameter set compared with a reference irradiation parameter set used for irradiating the remaining portions, i.e. with respect to a respective lower build material layer 3.1, 3.2 the portions of the irradiation area A.1, A.2 which not comprise a respective (selected) sub-area and with respect to a respective upper build material layer 3.2, 3.3 the portions which are not disposed above a respective (selected) sub-area of the irradiation area A.1, A.2 of the lower build material layer 3.1, 3.2, may be used. The irradiation parameter set used for generating respective vertically extending structural elements 13 comprises irradiation parameters allowing for the abovementioned high amount of energy input into the (selected) sub-area of the respective irradiation area of the respective lower build material layer 3.1, 3.2 and thus, allowing for that a (desired) consolidation of the (selected) sub-area SA.1, SA.2 of the irradiation area A.1, A.2 of the respective lower build material layer takes place. Hence, the irradiation parameter set used for generating respective vertically extending structural elements 13 typically results in a higher (vertical) energy input into the build material layers 3.1 - 3.n compared with the reference irradiation parameter set. The irradiation parameter set used for generating respective vertically extending structural elements 13 may comprise a different, i.e. typically a higher, beam power, (higher) beam intensity, different (vertical) focal position, different focal spot size, etc. compared with the reference irradiation parameter set.

As is apparent from Fig. 5 - 11, a plurality of respective structural elements 13 may be built or generated which are uniformly or non-uniformly distributed throughout the three-dimensional object 2.

Fig. 5 shows an exemplary embodiment of respective vertically extending structural elements 13 in an exemplary uniform arrangement, whereby a first group of vertically extending structural elements 13 extend between a first build material layer 3.1 and a second build material layer 3.2, and a second group of vertically extending structural elements 13 extend between the second build material layer 3.2 and a third build material layer 3.3. Fig. 5 also shows that respective vertically extending structural elements 13 may be horizontally offset from each other. Also, a vertical offset of respective vertically extending structural elements 13 is possible.

Fig. 6 shows an exemplary embodiment of respective vertically extending structural elements 13 in an exemplary uniform arrangement, whereby a first group of vertically extending structural elements 13 extend between a first build material layer 3.1 and a second build material layer 3.2, and a second group of vertically extending structural elements 13 extend between the second build material layer 3.2, a third build material layer 3.3, and a fourth build material layer 3.4. Fig. 6 thus, shows vertically extending structural elements 13 which extend over more than two build material layers. Fig. 6 also shows that respective vertically extending structural elements 13 may be horizontally offset from each other. Also, a vertical offset of respective vertically extending structural elements 13 is possible.

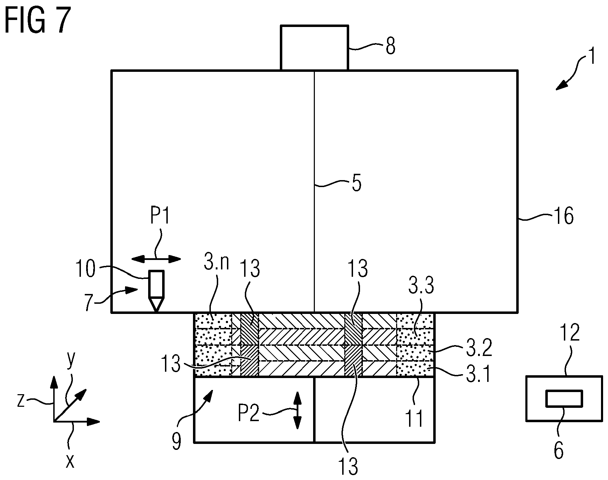

Fig. 7 shows an embodiment in which respective vertically extending structural elements 13 are vertically adjacently offset resulting in a vertically stacked arrangement of respective vertically extending structural elements 13.

In either case, the irradiation parameter set used for generating respective generating respective vertically extending structural elements 13 may be selected in such a manner that the vertically extending structural elements 13 have different structural properties, particularly mechanical properties, compared with other consolidated areas of the remaining irradiated portions of respective irradiation areas of respective build material layer 3.1 - 3.n. In such a manner, the three-dimensional object 2 which is to be additively manufactured, may be provided with composite-material-like structural properties, whereby respective vertically extending structural elements 13 may represent strengthening structures extending in a base material structure represented by the remaining portions of respective irradiation areas of build material layers 3.1 - 3.n.

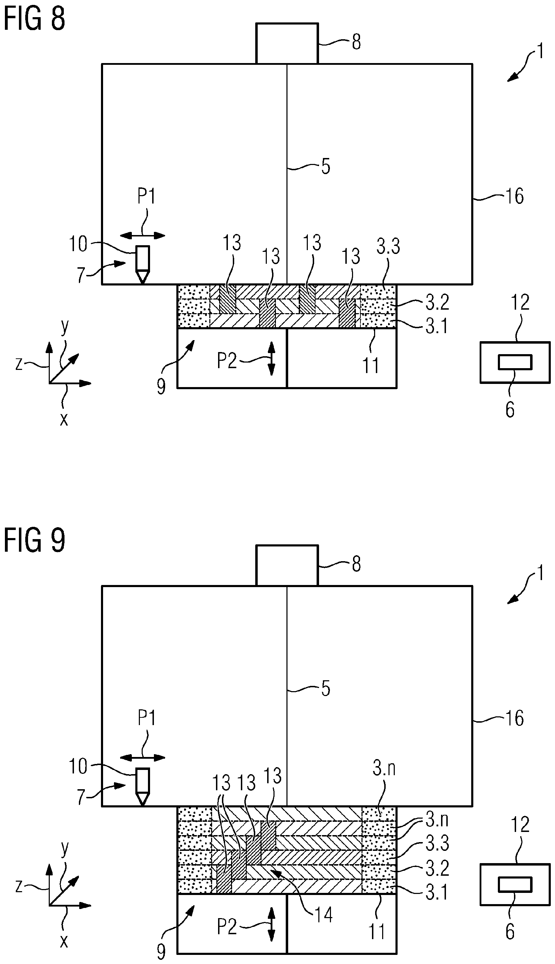

Fig. 8 shows a respective exemplary embodiment of respective vertically extending structural elements 13 having different structural properties, particularly mechanical properties, compared with other consolidated areas of the remaining irradiated portions of respective irradiation areas of respective build material layer 3.1 - 3.n. In other words, the respective vertically extending structural elements 13 differ in their structural properties, particularly mechanical properties, which is a result from different irradiation parameters used for generating the respective vertically extending structural elements 13. The different structural properties of respective vertically extending structural elements 13 are indicated by different hatchings in Fig. 8.

Fig. 9 shows an exemplary embodiment of respective vertically extending structural elements 13 in a staggered arrangement. A first vertically extending structural element 13 vertically extends between a first build material layer 3.1 and a second build material layer 3.2, a second vertically extending structural element 13 vertically extends between the second build material layer 3.2 and a third build material layer 3.3, a fourth vertically extending structural element 13 vertically extends between the third build material layer 3.3 and a fourth build material layer 3.4 and so on.

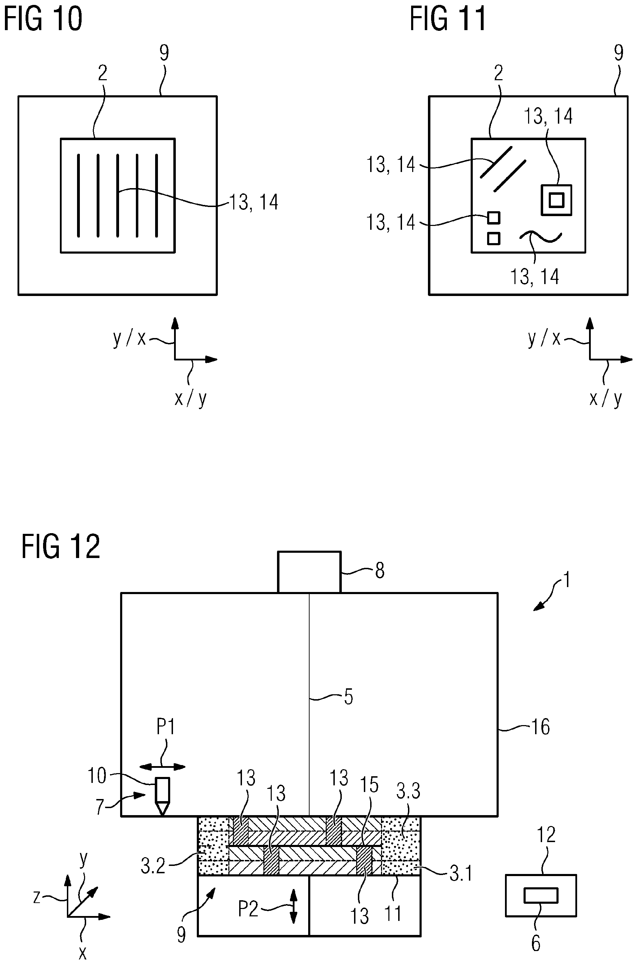

In the exemplary embodiment of Fig. 9 and Fig. 10, Fig. 10 being a corresponding top-view to Fig. 9, respective vertically extending structural elements 13 are adjacently disposed so as to generate a staircase-like arrangement 14 in which respective adjacently disposed vertically extending structural elements 13 represent the steps of the stair-case like arrangements 14 (see Fig. 9).

The embodiments of Fig. 10 and Fig. 11 indicate that by concertedly introducing respective stair-case like arrangements 14 of same or different spatial orientation in a three-dimensional object 2 which is to be manufactured, a measure for concertedly controlling the isotropic properties of the three-dimensional object 2 is given.

As is apparent from the embodiment of Fig. 11, a plurality of respective staircase-like arrangements 14 may be provided in uniform or non-uniform distribution across the cross-section of the three-dimensional object 2 which is to be manufactured. Respective staircase-like arrangements 14 may be oriented in same or different spatial directions; i.e. a first staircase-like arrangement 14 may be oriented in a first spatial direction, e.g. in an x-direction of the three-dimensional object 2, and a second staircase-like arrangement 14 may be oriented in a second spatial direction, e.g. in a y-direction of the three-dimensional object 2. By concertedly arranging and orienting respective stair-case like arrangements 14 of same or different vertical extensions and/or same or different spatial orientation in the three-dimensional object 2 which is to be manufactured, a measure for concertedly controlling the isotropic properties of the three-dimensional object 2 is given.

Fig. 12 shows an exemplary embodiment which shows that the arrangement and orientation of respective vertically extending structural elements 13 and respective stair-case like arrangements 14, respective may also be used to generate breaking point structures 15 in the three-dimensional object 2 which is to be manufactured. As is apparent from Fig. 11, respective generate breaking point structures 15 may be generated between consolidated build material layers in between which no respective vertically extending structural element 13 extends, i.e. in between build material layers which are not vertically connected by at least one vertically extending structural element 13.

One or more features specified in context with a specific embodiment may be combined with one or more features specified in context with at least one further embodiment, provided the combination falls within the scope of the appended claims.

## Claims

1. Method for additively manufacturing at least one three-dimensional object (2) by means of successive layerwise selective irradiation and consolidation of build material layers (3) by means of at least one energy beam (5), comprising
- irradiating and thereby consolidating an irradiation area (A) which is to be selectively irradiated and thereby consolidated of a first build material layer (3), whereby at least one sub-area (SA) of the irradiation area (A) which is at least partly disposed below at least one irradiation area (A) which is to be selectively irradiated and thereby consolidated of a second build material layer (3) which is disposed directly above the first build material layer (3) is excluded from being irradiated and thereby consolidated; and
- irradiating the irradiation area (A) of the second build material layer (3) in an area above the at least one sub-area (SA) of the irradiation area (A) of the first build material layer (3) in such a manner that the at least one sub-area (SA) of the irradiation area (A) of the first build material layer (3) is consolidated, **wherein**
by irradiating the irradiation area (A) of the at least one second build material layer (3), a vertically extending structural element (13) is generated which at least comprises selectively irradiated and thereby consolidated portions of the irradiation area (A) of the at least one second build material layer (3) and the at least one sub-area (SA) of the first build material layer (3), **characterized in that** a plurality of vertically extending structural elements (13) are generated which are uniformly or non-uniformly distributed throughout the three-dimensional object (2) which is to be additively manufactured.

2. Method according to Claim 1, **wherein** the or at least one area of the irradiation area (A) of the second build material layer (3) which is disposed above a respective sub-area (SA), particularly the or at least one selected sub-area (SA), of the first build material layer (3) is irradiated with a different irradiation parameter set compared with a reference irradiation parameter set applied for irradiation the remaining portions of the second build material layer (3), particularly with a different irradiation parameter set resulting in a higher energy input into this area of the irradiation area (A) of the second build material layer (3) compared with the reference irradiation parameter set.

3. Method according to Claim 1 or 2, **wherein** by irradiating the irradiation area (A) of the at least one second build material layer (3), a vertically extending consolidating region is built which at least comprises portions of the irradiation area (A) of the at least one second build material layer (3) which are to be selectively irradiated and thereby consolidated as well as the at least one sub-area (SA) of the first build material layer (3).

4. Method according to any of the preceding Claims, **wherein** a vertically extending structural element (13) is generated with a two-dimensional or three-dimensional shape and/or a two-dimensional or three-dimensional extension through the three-dimensional object (2) which is to be additively manufactured.

5. Method according to any of the preceding Claims, **wherein** for generating a vertically extending structural element (13) a different irradiation parameter set compared with a reference irradiation parameter set applied for irradiating the remaining portions of the respective irradiation area (A) of the respective build material layer (3), particularly a different irradiation parameter set resulting in a higher energy input into the build material layers (3) compared with the reference irradiation parameter set, is used.

6. Method according to any of the preceding Claims, **wherein** vertically and/or horizontally offset, in particular vertically and/or horizontally stacked, vertically extending structural elements (13) are generated.

7. Method according to any of the preceding Claims, **wherein** vertically extending structural elements (13) are built which are adjacently disposed so as to generate a staircase-like arrangement (14).

8. Method according to Claim 7, **wherein** a plurality of staircase-like arrangement (14) are generated which are uniformly or non-uniformly distributed throughout the three-dimensional object (2).

9. Method according to any of the preceding Claims, **wherein** a respective vertically extending structural element (13) having a vertical extension of the sum of the layer thicknesses of the respective build material layers (3) through which the vertically extending structural element (13) extends in vertical direction is generated.

10. Method according to any of the preceding Claims, **wherein** respective vertically extending structural elements (13) and/or staircase-like arrangements (14) are disposed in such a manner so as to concertedly adjust the structural properties, particularly the mechanical properties, of the three-dimensional object (2) which is to be additively manufactured.

11. Control unit (6) for an apparatus (1) for additively manufacturing at least one three-dimensional object (2) by means of successive layerwise selective irradiation and consolidation of build material layers (3) by means of at least one energy beam (5), the control unit (6) being configured to, particularly in accordance with a method according to any of the preceding Claims,:
- control irradiating and thereby consolidating an irradiation area (A) which is to be selectively irradiated and thereby consolidated of a first build material layer (3), whereby at least one sub-area (SA) of the irradiation area (A) which is at least partly disposed below at least one irradiation area (A) which is to be selectively irradiated and thereby consolidated of a second build material layer (3) which is disposed directly above the first build material layer (3) is excluded from being irradiated and thereby consolidated; and
- control irradiating the irradiation area (A) of the second build material layer (3) in an area above the at least one sub-area (SA) of the irradiation area (A) of the first build material layer (3) in such a manner that the at least one sub-area (SA) of the irradiation area (A) of the first build material layer (3) is consolidated; **wherein**
by irradiating the irradiation area (A) of the at least one second build material layer (3), a vertically extending structural element (13) is generated which at least comprises selectively irradiated and thereby consolidated portions of the irradiation area (A) of the at least one second build material layer (3) and the at least one sub-area (SA) of the first build material layer (3), whereby
a plurality of vertically extending structural elements (13) are generated which are uniformly or non-uniformly distributed throughout the three-dimensional object (2) which is to be additively manufactured.

12. Apparatus (1) for additively manufacturing at least one three-dimensional object (2) by means of successive layerwise selective irradiation and consolidation of layers of build material (3) by means of at least one energy beam (5), comprising a control unit (6) according to Claim 11.

## Patentansprüche

1. Verfahren zur additiven Herstellung mindestens eines dreidimensionalen Objekts (2) mittels sukzessiver schichtweiser selektiver Bestrahlung und Verfestigung von Aufbaumaterialschichten (3) durch mindestens einen Energiestrahl (5), umfassend
- Bestrahlen und dadurch Verfestigen eines selektiv zu bestrahlenden und dadurch zu verfestigenden Bestrahlungsbereichs (A) einer ersten Aufbaumaterialschicht (3), wobei mindestens ein Teilbereich (SA) des Bestrahlungsbereichs (A) von der Bestrahlung und dadurch Verfestigung ausgenommen ist, und der zumindest teilweise unterhalb mindestens eines selektiv zu bestrahlenden und dadurch zu verfestigenden Bestrahlungsbereichs (A) einer direkt über der ersten Aufbaumaterialschicht (3) angeordneten zweiten Aufbaumaterialschicht (3) angeordnet ist; und
- Bestrahlen des Bestrahlungsbereichs (A) der zweiten Aufbaumaterialschicht (3) in einem Bereich oberhalb des mindestens einen Teilbereichs (SA) des Bestrahlungsbereichs (A) der ersten Aufbaumaterialschicht (3) in der Weise, dass der mindestens eine Teilbereich (SA) des Bestrahlungsbereichs (A) der ersten Aufbaumaterialschicht (3) verfestigt wird, **worin**
durch Bestrahlung des Bestrahlungsbereichs (A) der mindestens einen zweiten Aufbaumaterialschicht (3) ein vertikal verlaufendes Strukturelement (13) erzeugt wird, das zumindest selektiv bestrahlte und dadurch verfestigte Abschnitte des Bestrahlungsbereichs (A) der mindestens einen zweiten Aufbaumaterialschicht (3) und des mindestens einen Teilbereichs (SA) der ersten Aufbaumaterialschicht (3) umfasst, **dadurch gekennzeichnet, dass**
mehrere vertikal erstreckende Strukturelemente (13) erzeugt werden, die gleichmäßig oder ungleichmäßig über das dreidimensionale Objekt (2) verteilt sind, das additiv hergestellt werden soll.

2. Verfahren nach Anspruch 1, **worin** der oder mindestens ein Bereich des Bestrahlungsbereichs (A) der zweiten Aufbaumaterialschicht (3), der oberhalb eines jeweiligen Teilbereichs (SA) angeordnet ist, insbesondere der oder wenigstens ein ausgewählter Teilbereich (SA), der ersten Aufbaumaterialschicht (3) angeordnet ist, mit einem anderen Bestrahlungsparametersatz im Vergleich zu einem Referenzbestrahlungsparametersatz bestrahlt wird, der für die Bestrahlung der übrigen Abschnitte der zweiten Aufbaumaterialschicht (3) angewendet wird, insbesondere mit einem anderen Bestrahlungsparametersatz, der zu einem höheren Energieeintrag in diesen Bereich des Bestrahlungsbereichs (A) der zweiten Aufbaumaterialschicht (3) im Vergleich zum Referenzbestrahlungsparametersatz führt.

3. Verfahren nach Anspruch 1 oder 2, **worin** durch Bestrahlung des Bestrahlungsbereichs (A) der mindestens einen zweiten Aufbaumaterialschicht (3) ein vertikal verlaufender Verfestigungsbereich aufgebaut wird, der zumindest Abschnitte des Bestrahlungsbereichs (A) der mindestens einen zweiten Aufbaumaterialschicht (3) umfasst, die selektiv zu bestrahlen und dadurch zu verfestigen sind, sowie den mindestens einen Teilbereich (SA) der ersten Aufbaumaterialschicht (3).

4. Verfahren nach einem der vorangegangenen Ansprüche, **worin** ein vertikal verlaufendes Strukturelement (13) mit einer zweidimensionalen oder dreidimensionalen Form und/oder einer zweidimensionalen oder dreidimensionalen Erstreckung durch das additiv zu fertigende dreidimensionale Objekt (2) erzeugt wird.

5. Verfahren nach einem der vorangegangenen Ansprüche, **worin** zur Erzeugung eines sich vertikal erstreckenden Strukturelements (13) ein im Vergleich zu einem Referenzbestrahlungsparametersatz unterschiedlicher Bestrahlungsparametersatz verwendet wird, der zur Bestrahlung der restlichen Abschnitte des jeweiligen Bestrahlungsbereichs (A) der jeweiligen Aufbaumaterialschicht (3) angewendet wird, insbesondere ein unterschiedlicher Bestrahlungsparametersatz, der zu einem höheren Energieeintrag in die Aufbaumaterialschichten (3) im Vergleich zum Referenzbestrahlungsparametersatz führt.

6. Verfahren nach einem der vorangegangenen Ansprüche, **worin** vertikal und/oder horizontal versetzte, insbesondere vertikal und/oder horizontal gestapelte, vertikal verlaufende Strukturelemente (13) erzeugt werden.

7. Verfahren nach einem der vorangegangenen Ansprüche, **worin** vertikal verlaufende Strukturelemente (13) gebaut werden, die so nebeneinander angeordnet sind, dass eine treppenartige Anordnung (14) entsteht.

8. Verfahren nach Anspruch 7, **worin** eine Vielzahl von treppenartigen Anordnungen (14) erzeugt werden, die gleichmäßig oder ungleichmäßig über das dreidimensionale Objekt (2) verteilt sind.

9. Verfahren nach einem der vorangegangenen Ansprüche, **worin** ein jeweiliges vertikal verlaufendes Strukturelement (13) mit einer vertikalen Erstreckung von der Summe der Schichtdicken der jeweiligen Aufbaumaterialschichten (3), durch die sich das vertikal verlaufende Strukturelement (13) in vertikaler Richtung erstreckt, erzeugt wird.

10. Verfahren nach einem der vorangegangenen Ansprüche, **worin** jeweils vertikal verlaufende Strukturelemente (13) und/oder treppenartige Anordnungen (14) so angeordnet werden, dass die Struktureigenschaften, insbesondere die mechanischen Eigenschaften, des additiv herzustellenden dreidimensionalen Objekts (2) aufeinander abgestimmt werden.

11. Steuereinheit (6) für eine Vorrichtung (1) zur additiven Herstellung mindestens eines dreidimensionalen Objekts (2) mittels sukzessiver schichtweiser selektiver Bestrahlung und Verfestigung von Aufbaumaterialschichten (3) mittels mindestens eines Energiestrahls (5), wobei die Steuereinheit (6), insbesondere gemäß einem Verfahren nach einem der vorangegangenen Ansprüche, konfiguriert ist:
- zum Kontrollbestrahlen und dadurch Verfestigen eines selektiv zu bestrahlenden und dadurch zu verfestigenden Bestrahlungsbereichs (A) einer ersten Aufbaumaterialschicht (3), wobei mindestens ein Teilbereich (SA) des Bestrahlungsbereichs (A) von der Bestrahlung und dadurch Verfestigung ausgenommen ist, und der zumindest teilweise unterhalb mindestens eines selektiv zu bestrahlenden und dadurch zu verfestigenden Bestrahlungsbereichs (A) einer direkt über der ersten Aufbaumaterialschicht (3) angeordneten zweiten Aufbaumaterialschicht (3) angeordnet ist; und
- den Bestrahlungsbereich (A) der zweiten Aufbaumaterialschicht (3) in einem Bereich oberhalb des mindestens einen Teilbereichs (SA) des Bestrahlungsbereichs (A) der ersten
Aufbaumaterialschicht (3) derart kontrolliert zu bestrahlen, dass der mindestens eine Teilbereich (SA) des Bestrahlungsbereichs (A) der ersten Aufbaumaterialschicht (3) verfestigt wird; **worin** durch Bestrahlung des Bestrahlungsbereichs (A) der mindestens einen zweiten Aufbaumaterialschicht (3) ein sich vertikal erstreckendes Strukturelement (13) erzeugt wird, das zumindest selektiv bestrahlte und dadurch verfestigte Abschnitte des Bestrahlungsbereichs (A) der mindestens einen zweiten Aufbaumaterialschicht (3) und des mindestens einen Teilbereichs (SA) der ersten Aufbaumaterialschicht (3) umfasst, wodurch
mehrere vertikal erstreckende Strukturelemente (13) erzeugt werden, die gleichmäßig oder ungleichmäßig über das dreidimensionale Objekt (2) verteilt sind, das additiv hergestellt werden soll.

12. Vorrichtung (1) zur additiven Herstellung mindestens eines dreidimensionalen Objekts (2) durch aufeinanderfolgende schichtweise selektive Bestrahlung und Verfestigung von Aufbaumaterialschichten (3) mittels mindestens eines Energiestrahls (5), umfassend eine Steuereinheit (6) gemäß Anspruch 11.

## Revendications

1. Procédé de fabrication additive d'au moins un objet tridimensionnel (2) par irradiation successive sélective couche par couche et consolidation de couches de matériau de construction (3), au moyen d'au moins un faisceau d'énergie (5), comprenant de
- irradier et ainsi consolider une zone d'irradiation (A) devant être sélectivement irradiée et ainsi consolidée d'une première couche de matériau de construction (3), où au moins une sous-zone (SA) de la zone d'irradiation (A) qui est au moins partiellement sous au moins une zone d'irradiation (A) qui doit être sélectivement irradiée et ainsi consolidée d'une seconde couche de matériau de construction (3), qui est disposée directement au-dessus de la première couche de matériau de construction (3), est exclue de l'irradiation et donc de la consolidation ; et
- irradier la zone d'irradiation (A) de la seconde couche de matériau de construction (3) dans une zone au-dessus de l'au moins une sous-zone (SA) de la zone d'irradiation (A) de la première couche de matériau de construction (3) de façon qu'au moins une sous-zone (SA) de la zone d'irradiation (A) de la première couche de matériau de construction (3) soit consolidée, où
en irradiant la zone d'irradiation (A) de l'au moins une seconde couche de matériau de construction (3), un élément structurel s'étendant verticalement (13) est généré qui comprend au moins des portions sélectivement irradiées et donc consolidées de la zone d'irradiation (A) de l'au moins une seconde couche de matériau de construction (3) et l'au moins une sous-zone (SA) de la première couche de matériau de construction (3), **caractérisé en ce que**
une pluralité d'éléments structurels s'étendant verticalement (13) est générée, qui sont distribués uniformément ou non sur tout l'objet tridimensionnel (2) qui doit être fabriqué additivement.

2. Procédé selon la revendication 1, dans lequel la ou l'au moins une zone de la zone d'irradiation (A) de la seconde couche de matériau de construction (3) qui est disposée au-dessus d'une sous-zone respective (SA), en particulier la ou l'au moins une sous-zone sélectionnée (SA) de la première couche de matériau de construction (3), est irradiée avec un jeu de paramètres d'irradiation différent comparé à un jeu de paramètres d'irradiation de référence appliqué pour l'irradiation des portions restantes de la seconde couche de matériau de construction (3), en particulier avec un jeu de paramètres d'irradiation différent d'où résulte un apport d'énergie plus élevé dans la zone de la zone d'irradiation (A) de la seconde couche de matériau de construction (3) comparé au jeu de paramètres d'irradiation de référence.

3. Procédé selon la revendication 1 ou 2 dans lequel, en irradiant la zone d'irradiation (A) de l'au moins une seconde couche de matériau de construction (3), une région de consolidation s'étendant verticalement est construite qui comprend au moins des portions de la zone d'irradiation (A) de l'au moins une seconde couche de matériau de construction (3) qui sont destinées à être sélectivement irradiées et donc consolidées ainsi que l'au moins une sous-zone (SA) de la première couche de matériau de construction (3).

4. Procédé selon l'une quelconque des revendications précédentes, dans lequel un élément structurel s'étendant verticalement (13) est généré avec une forme bidimensionnelle ou tridimensionnelle et/ou une extension bidimensionnelle ou tridimensionnelle à travers l'objet tridimensionnel (2) qui doit être fabriqué additivement.

5. Procédé selon l'une quelconque des revendications précédentes dans lequel, pour générer un élément structurel s'étendant verticalement (13), on utilise un jeu de paramètres d'irradiation différent d'un jeu de paramètres d'irradiation de référence appliqué pour irradier les portions restantes de la zone d'irradiation respective (A) de la couche de matériau de construction respective (3), en particulier un jeu de paramètres d'irradiation différent entraînant un apport d'énergie plus élevé aux couches de matériau de construction (3) comparé au jeu de paramètres d'irradiation de référence.

6. Procédé selon l'une quelconque des revendications précédentes, dans lequel est généré un décalage vertical et/ou horizontal, en particulier des éléments structurels s'étendant verticalement (13) empilés verticalement et/ou horizontalement.

7. Procédé selon l'une quelconque des revendications précédentes, dans lequel des éléments structurels s'étendant verticalement (13) sont construits disposés de façon adjacente de façon à générer une disposition en escalier (14).

8. Procédé selon la revendication 7, dans lequel une pluralité de dispositions en escalier (14) est générée, qui sont distribués uniformément ou non sur tout l'objet tridimensionnel (2).

9. Procédé selon l'une quelconque des revendications précédentes, dans lequel un élément structurel respectif s'étendant verticalement (13) ayant pour extension verticale la somme des épaisseurs des couches de matériau de construction respectives (3) à travers lesquelles est généré l'élément structurel s'étendant verticalement (13) s'étend en direction verticale.

10. Procédé selon l'une quelconque des revendications précédentes, dans lequel des éléments structurels respectifs s'étendant verticalement (13) et/ou des dispositions en escalier (14) sont disposés de façon à ajuster de concert les propriétés structurelles, en particulier les propriétés mécaniques, de l'objet tridimensionnel (2) destiné à être fabriqué additivement.

11. Unité de commande (6) pour un appareil (1) conçu pour fabriquer additivement au moins un objet tridimensionnel (2) au moyen d'une irradiation successive sélective couche par couche et consolidation de couches de matériau de construction (3) au moyen d'au moins un faisceau d'énergie (5), l'unité de commande (6) étant configurée pour, en particulier suivant un procédé selon l'une quelconque des revendications précédentes :
- contrôler l'irradiation et ainsi la consolidation d'une zone d'irradiation (A) devant être sélectivement irradiée et ainsi consolidée d'une première couche de matériau de construction (3), où au moins une sous-zone (SA) de la zone d'irradiation (A) qui est au moins partiellement sous au moins une zone d'irradiation (A) qui doit être sélectivement irradiée et ainsi consolidée d'une seconde couche de matériau de construction (3), qui est disposée directement au-dessus de la première couche de matériau de construction (3), est exclue de l'irradiation et donc de la consolidation ; et
- contrôler l'irradiation de la zone d'irradiation (A) de la seconde couche de matériau de construction (3) dans une zone au-dessus de l'au moins une sous-zone (SA) de la zone d'irradiation (A) de la première seconde couche de matériau de construction (3) de sorte que l'au moins une sous-zone (SA) de la zone d'irradiation (A) de la première couche de matériau de construction (3) soit consolidée ; où en irradiant la zone d'irradiation (A) de l'au moins une seconde couche de matériau de construction (3), un élément structurel s'étendant verticalement (13) est généré qui comprend au moins des portions sélectivement irradiées et donc consolidées de la zone d'irradiation (A) de l'au moins une seconde couche de matériau de construction (3) et l'au moins une sous-zone (SA) de la première couche de matériau de construction (3), où une pluralité d'éléments structurels s'étendant verticalement (13) est générée, qui sont distribués uniformément ou non sur tout l'objet tridimensionnel (2) qui doit être fabriqué additivement.

12. Appareil (1) de fabrication additive d'au moins un objet tridimensionnel (2) par irradiation successive sélective couche par couche et consolidation de couches de matériau de construction (3) au moyen d'au moins un faisceau d'énergie (5), comprenant une unité de commande (6) selon la revendication 11.
